Europäisches Patentamt

European Patent Office

Office européen des brevets

(19)

(11) **EP 0 535 234 B1**

(12) **EUROPÄISCHE PATENTSCHRIFT**

(45) Veröffentlichungstag und Bekanntmachung des Hinweises auf die Patenterteilung:
**16.09.1998 Patentblatt 1998/38**

(21) Anmeldenummer: **91919893.7**

(22) Anmeldetag: **15.10.1991**

(51) Int Cl.[6]: **C07G 17/00**, C10F 7/00

(86) Internationale Anmeldenummer:
**PCT/SU91/00205**

(87) Internationale Veröffentlichungsnummer:
**WO 92/16540 (01.10.1992 Gazette 1992/25)**

(54) **OXYDATIONPRODUKT EINES FESTEN BEFEUCHTETEN BRENNBAREN MINERALS UND VERFAHREN ZU SEINER HERSTELLUNG**

OXIDATION PRODUCT OF SOLID HUMIFIED COMBUSTIBLE MINERAL AND METHOD FOR OBTAINING IT

PRODUIT D'OXYDATION DE MINERAUX COMBUSTIBLES SOLIDES HUMIFIES ET SON PROCEDE DE PRODUCTION

(84) Benannte Vertragsstaaten:
**AT BE CH DE GB LI NL SE**

(30) Priorität: **19.03.1991 SU 4917175**

(43) Veröffentlichungstag der Anmeldung:
**07.04.1993 Patentblatt 1993/14**

(73) Patentinhaber: **KRUGLOV, Valery Petrovich Tverskaya obl., 171273 (SU)**

(72) Erfinder: **KRUGLOV, Valery Petrovich Tverskaya obl., 171273 (SU)**

(74) Vertreter: **Patentanwälte Zellentin & Partner Zweibrückenstrasse 15 80331 München (DE)**

(56) Entgegenhaltungen:
**DE-C- 1 592 783        DE-C- 2 320 678
GB-B- 1 283 385        SU-A- 641 948
US-A- 3 197 300        US-A- 3 377 152**

Bemerkungen:
Die Akte enthält technische Angaben, die nach dem Eingang der Anmeldung eingereicht wurden und die nicht in dieser Patentschrift enthalten sind.

**Beschreibung**

**Gebiet der Technik**

Die vorliegende Erfindung betrifft das Gebiet der Herstellung von Produkten der chemischen Verarbeitung fester fossiler Brennstoffe, insbesondere ein Produkt der Oxydation fester humifizierter fossiler Brennstoffe und ein Verfahren zu dessen Gewinnung.

**Stand der Technik**

Bekannt sind Verfahren zur hydrolytischen und oxydativ-hydrolytischen Verarbeitung diverser fester fossiler Brennstoffe (Torf, oxydierte Steinkohle und Braunkohle). Die erhaltenen Produkte weisen physiologische Aktivität auf, die auf das Vorhandensein von Aminosäuren und Huminsäuren zurückzuführen ist, welche die Dehnbarkeit von Zellhüllen beeinflussen, den Zufluß von Wasser in die Zelle steigern, die Menge der von der Zelle assimilierten gelösten Nährstoffe vergrößern sowie die Aktivität der Fermente der Zelle steigern. All dies fördert eine intensivere Synthese von Eiweiß und Nukleinsäuren. Daher werden diese Produkte als wachstumsfördernde Mittel und als Futterzusätze verwendet.

Bekannt ist ein Verfahren zur Herstellung eines Wuchsstoffes (G.W. Naumowa, "Torf v biotechnologii", Minsk, "Nauka itechnika", 1987, S.129-133), bei dem man Magellanicum-Torf mit einem Zersetzungsgrad von 25% miteiner 4-%igen (Gew.%) Schwefelsäurelösung im Verhältnis der festen Phase zur flüssigen Phase von 1:20 und einer Temperatur von 98°C behandelt und anschließend die flüssige Phase der hydrolytischen Zersetzung des Torfs abtrennt.

Eine Prüfung des erhaltenen flüssigen Produkts, eines Wuchsstoffs, hinsichtlich seiner biologischen Wirksamkeit anhand von Hefeteig ergab eine Ertragssteigerung der Hefe um 25-35%, was die wachstumsfördernde Wirkung des Produkts bestätigt.

Der beschriebene Wuchsstoff weist jedoch eine geringe wachstumsfördernde Wirksamkeit auf, da das Verfahren der hydrolytischen Zersetzung der organischen Torfmasse den Humin-Protein-Komplex nur teilweise angreift, und die Hauptmasse der Huminsäuren in einem nichthydrolysierbaren Rückstand zurückbleibt.

Zur Steigerung der physiologischen Wirksamkeit der Produkte aus festen fossilen Brennstoffen wurden diese einer oxydativ-hydrolytischen Zersetzung unterzogen, wobei unterschiedliche Oxydationsmittel eingesetzt wurden: Salpetersäure, Sauerstoff, Ozon u.a.

Bekannt ist ein Verfahren zur Herstellung eines Oxydationsproduktes eines festen humifizierten fossilen Brennstoffes in Form eines pulverförmigen nitrohuminsauren Wuchsstoffes (SU, A, 641948), das die Trocknung des Ausgangstorfs bis zu einer Restfeuchte von 5-10%, seine Zerkleinerung und Oxydation mit konzentrierter Salpetersäure in einer Menge von 15-50%, gerechnet als Monohydrat, bezogen auf die Trockensubstanz des Torfs, umfaßt. Die Oxydation wird bei einer Temperatur von 15 - 50°C während 5 - 40 min. durchgeführt. Das erhaltene Reaktionsgemisch wird mit gasförmigem Ammoniak neutralisiert und bis zum Erhalt des Endproduktes mit einer Restfeuchte von 5-30% getrocknet.

Der hergestellte Wuchsstoff zeichnet sich durch eine ausgeprägte wachstumsfördernde Wirksamkeit aus und steigert z.B. den Ertrag von Hefe um 88%. Auch Kartoffelernteerträge werden durch diesen Stoff um 18% gesteigert.

Der beschriebene Wuchsstoff zeigt jedoch eine inkonstante wachstumsfördernde Wirksamkeit, da chemische Kennwerte, die die physiologischen Eigenschaften beeinflussen, und eindeutige Kriterien für die Optimierung des Herstellungsprozesses fehlen. Das Fehlen dieser Werte ist darauf zurückzuführen, daß der Prozeß von vielen schwersteuerbaren und zusammenhängenden Faktoren abhängig ist: Qualität und Zusammensetzung des Rohstoffs, Oxydationsmittel und Oxydationsbedingungen. Auf Grund der Inkonstanz und des Fehlens optimaler Kennwerte ist die Produktion dieses Wuchsstoffs in größerem Umfang nicht möglich.

Aus der DE 23 20 678 C2 ist es bekannt geringwertige Kohle mit einer Harnstofflösung aufzuschließen und anschließend mit Salpetersäure oder Wasserstoffperoxid zu oxidieren. Die gebildeten Phenol- Carboxyl- und Carbonyl-Gruppen werden mit Ammoniak neutralisiert , wodurch ein viel Stickstoff enthaltender Dünger gebildet wird.

**Offenbarung der Erfindung**

Aufgabe der Erfindung ist es, ein Oxydationsprodukt fester humifizierter fossiler Brennstoffe zu entwickeln, das konstante chemische Kenndaten und eine hohe wachstums fördernde Wirkung aufweist, sowie durch die Wahl entsprechender Oxydationsbedingungen ein Verfahren zu dessen Herstellung zu entwickeln, welches gewährleistet, daß das erhaltene Produkt konstante Kenndaten und einen hohen Ertrag hat.

Diese Aufgabe wird durch ein Oxydationsprodukt fester humifizierter fossiler Brennstoffe gelöst, das mindestens 5 Gew.% einer wasserlöslichen und Ethylalkohol-unlöslichen Fraktion auf der Grundlage von Fragmenten einer oxydativ-hydrolytischen Zersetzung von Huminsäuren enthält, die ein Molekulargewicht von 150-650 Dalton aufweist und sich durch folgende Eigenschaften auszeichnet:

- Elementarzusammensetzung, %:
  C : 50 ± 5; H: 5 ± 2; N: 5 ± 2, O: 40 ± 5;
- Absorptionsmaximum im UV-Spektrum (in $Na_2S$) bei einer Wellenlänge von 530, 640 nm;
- maximale Absorptionsfrequenzen im IR-Spektrum (KBr):
  3430, 3205, 1710, 1620, 1410, 1390, 1330, 1090, 1050, 780, 680 $cm^{-1}$
- Gehalt an Carboxylgruppen: 3,5 - 4,5 mVal/g,
  Gehalt an Hydroxylgruppen: 4,0 - 5,0 mVal/g;
- Temperatur bei Carbonisationsbeginn: 195°C (bei Ermittlung im Thermographieverfahren in Stickstoff);
- Aschegehalt: 1,5 - 3,0%.

Das erfindungsgemäße Produkt mit den genannten chemischen Kenndaten ist in der Literatur nicht beschrieben. Im Oxydationsprodukt fester humifizierter fossiler Brennstoffe wurde die aktive Wirksubstanz, die wasserlösliche und alkoholunlösliche Fraktion bestimmt und deren physikalische und chemische Kennwerte ermittelt, welche die chemischen und physiologischen Eigenschaften des Produkts bestimmen.

Das Produkt weist komplexbildende Eigenschaften bei der Umsetzung mit Metallionen und katalytische Aktivität auf, es inaktiviert Produkte der Lebenvorgänge anaerober Mikroorganismen und zeigt stimulierende Aktivität, die beim Stoffwechsel und beim Wachstum lebender Mikroorganismen zur Auswirkung kommt.

Das Oxydationsprodukt fester humifizierter fossiler Brennstoffe kann in Abhängigkeit vom Bestimmungszweck 5 - 100 Gew.% aktiven Wirkstoffes enthalten. Der restliche Teil des Produkts besteht aus einem oxydierten Kohlenstoff-Amin-Komplex, der keinen negativen Einfluß auf die Eigenschaften des Wirkstoffs hat, in Einzelfällen (beim Zusatz zum Tierfutter) jedoch einen positiven Einfluß ausübt.

Die Aufgabe wird auch durch ein Verfahren zur Herstellung des Oxydationsprodukts fester humifizierter fossiler Brennstoffe gelöst, in dem der genannte, Huminsäuren mit durchschnittlichem Molekulargewicht von 900 - 6000 Dalton enthaltende fossile Brennstoff mit einer Feuchte von mindestens 10% erfindungsgemäß bei erhöhter Temperatur mit einem Oxydationsmittel behandelt wird, das, bezogen auf Aktivsauerstoff, in einer Menge von 0,05 - 0,50 Gewichtsteilen pro 1 Gewichtsteil der genannten Huminsäuren eingesetzt wird, und das Reaktionsgemisch anschließend zum Endprodukt verarbeitet wird.

Das erfindungsgemäße Mengenverhältnis von Oxydationsmittel und Huminsäuren sowie die ermittelten Kenndaten des Rohstoffs gewährleisten die Herstellung eines Oxydationsproduktes fester humifizierter fossiler Brennstoffe mit den erfoderlichen chemischen Kenndaten und optimalen Werten der chemischen Eigenschaften und der physiologischen Wirksamkeit.

Das erfindungsgemäße Verfahren ergibt eine Ausbeute an aktiven Wirkfraktion in einer Menge von 80 - 95%, bezogen auf die Masse der Huminsäuren im Rohstoff. Das Verfahren ermöglicht es, die Eigenschaften des hergestellten Produktes zu regulieren, wodurch konstante optimale Kenndaten erreicht werden.

Durch das erfindungsgemäße Verfahren kann ein Oxydationsprodukt fester humifizierter fossiler Brennstoffe in Form eines Pulvers oder einer Lösung mit Standardausrüstungen unter Verwendung fester humifizierter fossiler Brennstoffe mit einer breiten Spanne von Eigenschaften hergestellt werden.

Zweckmäßigerweise wird als genannter fossiler Brennstoff Torf oder Braunkohle mit einem Huminsäurengehalt von mindestens 10% verwendet. In Abhängigkeit von der Verwendung des erfindungsgemäßen Produktes bei einer Feuchte des Rohstoffes unter 40% und bei Verwendung eines gasförmigen Oxydationsmittels erfolgt die Umwandlung des erhaltenen Reaktionsgemischs durch Trocknung und Zerkleinerung bis zum pulverförmien Zustand. Ein solches Produkt wird als Komplexbildner oder als Mittel zur Inaktivierung der Lebensvorgänge anaerober Mikroorganismen verwendet.

Bei Verwendung des Produktes als Wuchsstoff und als Regulierungsmittel des Stoffwechsels lebender Mikroorganismen wird die Behandlung des genannten fossilen Brennstoffes zweckmäßigerweise mit einem Oxydationsmittel aus der Gruppe konzentrierte Salpetersäure, Stickstoffoxide, Ozon, Sauerstoff vorgenommen. Die Verarbeitung des Reaktionsgemischs zum Endprodukt erfolgt durch Behandlung mit wässriger Lösung eines alkalischen Mittels, sowie anschließende Trocknung und Zerkleinerung bis zum pulverfömigen Zustand. Bei Verwendung des Produktes für den genannten Zweck in Form einer Lösung mit einem höheren Gehalt an wasserlöslicher und alkoholunlöslicher Fraktion sollte die Behandlung mit einem Oxydationsmittel aus der Gruppe wässrige Lösung der Salpetersäure, wässrige Wasserstoffperoxid-Lösung vorgenommen werden. Das in Form einer Suspension erhaltene Reaktionsgemisch wird in feste und flüssige Phase getrennt, die flüssige Phase wird mit einem alkalischen Mittel neutralisiert und bis auf einen Gehalt an Endprodukt in der Lösung von 20-30 Gew.% konzentriert, wobei im Endprodukt 10 - 15 Gew.% einer wasserlöslichen und alkoholunlöslichen Fraktion vorhanden sind. Ist im erhaltenen Endprodukt ein Gehalt der genannten Fraktion von 100 Gew.% erwünscht, wird zweckmäßigerweise das Endprodukt mit Alkohol aus der genannten Lösung ausgefällt und getrocknet.

Zur Intensivierung des Oxydationsprozesses sollte die Behandlung in Gegenwart von 1 - 8 Gew.% einer wässrigen Elektrolytlösung und bei einer Temperatur von 50 - 150°C durchgeführt werden.

Die chemischen Kenndaten des erfindungsgemäßen Oxydationsproduktes fester humifizierter fossiler Brennstoffe wurden nach bekannten Methoden ermittelt. Die UV-Spektren wurden für eine wässrige Lösung des Oxydationsproduktes fester humifizierter fossiler Brennstoffe mit einer Konzentration von 45,0 mg/l im Gemisch mit einer $Na_2S$-Lösung mit einer Konzentration von 1 g/l ermittelt. Die wachstumsfördernde Aktivität des Oxydationsproduktes fester humifizierter fossiler Brennstoffe wurde anhand des Wachstums von "Candida Scottie"-Hefe auf einem Standardnährboden bestimmt. Der Koeffizient der physiologischen Aktivität ($K_{phA}$) wurde aus dem Verhältnis der physiologischen Aktivität des Oxydationsproduktes fester humifizierter fossiler Brennstoffe mit einem Gehalt an wasserlöslicher und alkoholunlöslicher Fraktion von 0,005 Gew.% zur physiologischen Aktivität des Kalisalzes von Heteroauxin mit einer Konzentration von 0,005 Gew.%.

Die Bestimmung des durchschnittlichen Molekulargewichts der Huminsäuren im Rohstoff erfolgte nach SU, A, 1255914. Eine aus dem festen fossilen Brennstoff entnommene Huminsäurenprobe wurde bis zu einer Partikelgröße von von < 5 mm zerkleinert. 10 g der Probe wurden mit 250 ml 0,01 N NaOH-Lösung gemischt. Nach Erreichen des Gleichgewichtes im System (nach 10 - 24 Stunden wurde mit einem lichtelektrischen Kolorimeter die optische Dichte zweier im Abstand von 1 Stunde entnommener Proben auf Veränderungen hin geprüft) wurde die Lösung zentrifugiert, dekantiert, und in 10 ml Extrakt der Alkaligehalt bestimmt. Ein Teil der Lösung wurde bis zur Gewichtskonstanz getrocknet, die Masse der abgetrennten Fraktion wurde bestimmt und ihr Molgewicht nach folgender Formel berechnet:

$$M_{Fr.} = \frac{(G_{alk.} - K.V) \bullet 100}{0,01 \bullet (10 - V)} - 22$$

wobei

$G_{alk.}$ die Menge an Trockenmasse des Alkaliextrakts in Gewichtprozent,
V das Volumen einer zur Neutralisation von 10 ml Alkaliextrakt verwendeten 0,01 N Salzsäure, in ml und
K den Proportionalitätskoeffizienten von 0,0022 bedeuten.

Das Verfahren wurde mit derselben Probe bis zu ihrer völligen Auflösung 10 - 20x wiederholt. Die erhaltenen Ergebnisse wurden zur Berechnung des durchschnittlichen Molgewichts der untersuchten Probe nach folgender Formel verwendet:

$$M_{W.} = \frac{\sum M_{Fr.} \bullet G_{Fr.}}{\sum G_{Fr.}}$$

wobei

GFr. die Masse der Fraktion in g,
$\sum M_{Fr.} \bullet G_{Fr.}$ für alle Fraktionen die Summe der Produkte des Molekulargewichts jeder Fraktion, bezogen auf ihre Masse
$\sum G_{Fr.}$ die Summe der Massen aller Fraktionen in g bedeuten."

**Bevorzugte Ausführungsform der Erfindung**

In ein hermetisch geschlossenes Gefäß gibt man 500 g Hochmoor-Fuscum-Torf mit einer Feuchte von 30%, einem Aschegehalt von 1,58% und einem Gehalt an Huminsäuren von 350 g mit einem durchschnittlichen Molekulargewicht von 900 Dalton und setzt 11,9 g Stickstoffoxide mit einem Aktivsauerstoffgehalt von 5,97 g zu. Das Masseverhältnis der Huminsäuren zum Oxydationsmittel (bezogen auf Aktivsauerstoff) beträgt 1 : 0,017. Der Oxydationsprozeß wird bei einer Temperatur von 50°C bis zum Verschwinden des Stickstoffdioxids in der Gasphase durchgeführt. Das erhaltene Reaktionsgemisch wird getrocknet und bis zu einer Partikelgröße unter 1 mm zerkleinert. 500 g des erhaltenen Oxydationprodukts eines festen humifizierten fossilen Brennstoffs enthalten 32 g (6,4 Gew.%) einer wasserlöslichen und alkoholunlöslichen Fraktion mit einem Molekulargewicht von 340 Dalton. Die Ausbeute an dieser Fraktion, bezogen auf die Huminsäuren des Rohstoffs, beläuft sich auf 91,4%. Der physiologische Aktivitätskoeffizient des Produktes beträgt 1,48.

Nachstehend wird die Effektivität der Anwendung des Produktes der Oxydation fester humifizierter fossiler Brennstoffe (POFHFB) in der Vieh- und Geflügelaufzucht sowie im Pflanzenanbau erläutert.

Bei der Mast von Jungbullen miteinem Lebendgewicht von 240 - 400 kg ermöglicht die Verabreichung von pulverförmigem POFHFB in einer Dosis von 50 mg/kg eine Verringerung des Futterverbrauchs um 15,6%.

Beim Füttern von Kühen mit dem o.g. POFHFB in einer Dosis von 100 mg/kg erhöht sich die Milchleistung um 8,4 - 8,9%.

Beim der Aufzucht von zum Auffüllen des Milchkuhbestands bestimmten Färsen mit einem Lebendgewicht von 245 bis 440 kg fördert die Verabreichung des o.g. POFHFB in einer Dosis von 100 mg/kg eine Steigerung der tagesdurchschnittlichen Zunahme um 7,4% und ermöglicht eine zusätzliche jährliche Gewichtszunahme von 14,3 kg pro Tier.

Die Verwendung des o.g. POFHFB beim Füttern von Geflügel in einer Dosis von 0,25%, bezogen auf die Futtermenge, erhöht die Produktivität von Hühnern um 3,9% und verringert die Futterkosten um 4,1%.

Die Verwendung des o.g. pulverförmigen POFHFB in einer Dosis von 30 - 120 kg/ha beim Anbau von Winterweizen führt zu einer Steigerung des Ernteertrages um 2,2 - 11,6 dz/ha.

Die nachstehenden Beispiele erläutern die Herstellung des erfindungsgemäßen Produktes nach dem erfindungsgemäßen Verfahren.

Beispiel 1

In ein hermetisch geschlossenes Gefäß gibt man 2000 g Medium-Torf mit einer Feuchte von 95%, einem Aschegehalt von 2,8% und einem Gehalt an Huminsäuren von 22,2 g mit einem durchschnittlichen Molekulargewicht von 1500 Dalton und setzt 95 g einer 5%igen (Gew.%) wässrigen Natriumhydroxidlösung unter Vermischen zu. Zum erhaltenen Gemisch werden 5,9 g einer 40%igen (Gew.%) Wasserstoffperoxid-Lösung (1,11 g Aktivsauerstoff) zugegeben. Das Massenverhältnis der Huminsäuren zum Oxydationsmittel, bezogen auf Aktivsauerstoff, beträgt 1 : 0,05. Der Prozeß wird bei einer Temperatur von 90°C bis zum Verschwinden des Wasserstoffperoxids im Reaktionsgemisch durchgeführt. Das erhaltene Reaktionsgemisch wird filtriert und die wässrige Phase bis zu einem Trockensubstanzgehalt von 30 Gew.% eingedampft. 171,4 g des erhaltenen POFHFB enthalten 20,0 g (11,7 Gew.%) einer wasserlöslichen und alkoholunlöslichen Fraktion mit einem Molekulargewicht von 585 Dalton. Die Ausbeute an dieser Fraktion, bezogen auf Huminsäuren des Ausgangstorfs, beträgt 91,1%. Der Koeffizient der physiologischen Aktivität des POFHFB beträgt 1,35.

Beispiel 2

Zu 100 g des gemäß Beispiel 1 hergestellten POFHFB werden 1000 g 95-prozentiger Ethylalkohol unter Vermischen zugesetzt. Der entstehende Niederschlag wird abgetrennt und mit 500 g 95-prozentigem Ethylalkohol gewaschen, anschließend getrocknet und bis zu einer Partikelgröße unter 0,2 mm zerkleinert. Das erhaltene Produkt enthält 100 Gew.% einer wasserlöslichen und alkoholunlöslichen Fraktion mit einem Molekulargewicht von 495 Dalton. Der Koeffizient der physiologischen Aktivität beträgt 1,35.

Beispiel 3

Der Oxydationsprozeß wird wie in Beispiel 1 durchgeführt, mit dem Unterschied, daß 19 g einer 1-prozentigen wässrigen Natriumhydroxidlösung verwendet werden.

160 g des hergestellten POFHFB enthalten 17,5 g (10,9 Gew.%) einer wasserlöslichen und alkoholunlöslichen Fraktion mit einem Molekulargewicht von 560 Dalton. Die Ausbeute an dieser Fraktion, bezogen auf Huminsäuren des Ausgangstorfs, beträgt 78,8%. Der Koeffizient der physiologischen Aktivität des POFHFB beträgt 1,38.

Beispiel 4

Der Oxydationsprozeß wird wie in Beispiel 1 durchgeführt, mit dem Unterschied, daß 152 g einer 8%igen wässrigen Natriumhydroxidlösung verwendet werden. 175 g des hergestellten POFHFB enthalten 21,0 g (12,0 Gew.%) einer wasserlöslichen und alkoholunlöslichen Fraktion mit einem Molekulargewicht von 595 Dalton. Die Ausbeute an dieser Fraktion, bezogen auf Huminsäuren des Ausgangstorfs beträgt 94,6%. Der Koeffizient der physiologischen Aktivität des PFHFB beträgt 1,34.

Die nachstehende Tabelle enthält weitere Beispiele für die Durchführung des erfindungsgemäßen Verfahrens.

Tabelle

| Nr.der Bei-spiele | Fester humifizierter fossiler Brennstoff | | | |
|---|---|---|---|---|
| | Typ | Feuchte % | Aschegehalt % | Menge g |
| 1 | 2 | 3 | 4 | 5 |
| 5 | Foehrenwald-Wollgrastorf | 35 | 9,6 | 3000 |
| 6 | Foehrenwald-Wollgrastorf | 95 | 6,2 | 200 |
| 7 | Braunkohle | 95 | 3,5 | 6000 |
| 8 | Hochmoor-Fuscum-Torf | 30 | 1,58 | 500 |
| 9 | Braunkohle | 15 | 3,5 | 2000 |

Fortsetzung der Tabelle

| Nr.der Beispiele | Fester humifizierter fossiler Brennstoff | | |
|---|---|---|---|
| | Typ | Huminsäuren (HS) | |
| | | durchschnitt-liches Moleku-lar-gewicht, Dalton | Menge, g |
| 1 | 2 | 6 | 7 |
| 5 | Foehrenwald-Wollgrastorf | 2650 | 865,8 |
| 6 | Foehrenwald-Wollgrastorf | 1710 | 3,39 |
| 7 | Braunkohle | 6000 | 139,8 |
| 8 | Hochmoor-Fuscum-Torf | 900 | 35,0 |
| 9 | Braunkohle | 6000 | 792,2 |

Fortsetzung der Tabelle

| Nr. der Beisp. | Oxydationsmittel (O) | | | Verhältnis HS : O | Oxydationstemperatur, °C |
|---|---|---|---|---|---|
| | Typ | Menge, g | | | |
| | | gesamt | bezogen auf Aktivsauerstoff | (Gewichtsteil : Gewichtsteil) | |
| 1 | 8 | 9 | 10 | 11 | 12 |
| 5 | 55 Gew.% Salpetersäure | 940 | 262,6 | 1:0,30 | 95 |
| 6 | 55 Gew.% Salpetersäure | 5,93 | 1,50 | 1:0,44 | 150 |
| 7 | 55 Gew.% Salpetersäure | 97,9 | 24,9 | 1:0,18 | 90 |
| 8 | ozonierte Luft | 17,4 | 3,49 | 1:0,10 | 95 |
| 9 | 56 Gew.% Salpetersäure | 1393 | 3961 | 1:0,50 | 50 |

Fortsetzung der Tabelle

| Nr. der Beispiele | Behandlung des Reaktionsgemischs |
|---|---|
| 1 | 13 |
| 5 | Neutralisation mit Ammoniakwasser (25 Gew.%), Trocknung bis zu einer Feuchte von 5%, Zerkleinerung bis zu Partikelgröße von 0,2 mm |
| 6 | Abtrennung der flüssigen Phase, Neutralisation mit wässriger Ammoniaklösung, Eindampfen bis zu einer Konzentration von 25 Gew.%. |
| 7 | wie in Beispiel 6, Konzentration der Lösung: 20 Gew.% |
| 8 | Trocknung bis zu einer Feuchte von 5%, Zerkleinerung bis Partikelgröße unter 1 mm. |
| 9 | Neutralisation mit Ammoniakwasser (25 Gew.%), Trocknung bis zu einer Feuchte von 10%, Zerkleinerung bis Partikelgröße unter 1 mm |

Fortsetzung der Tabelle

| Nr. der Beisp. | Produkt der Oxydation eines festen humifizierten fossilen Brennstoffs (POFHFB) | | | | |
|---|---|---|---|---|---|
| | Menge g | Kenndaten der wasserlöslichen und alkoholunlöslichen Fraktion | | | |
| | | Molekularmasse, Dalton | Gehalt, g | Gehalt, Gew.% | Ausbeute, Gew.%, bezogen auf Huminsäuren (HS) |
| 1 | 14 | 15 | 16 | 17 | 18 |
| 5 | 2252 | 250 | 755,3 | 25 | 87,2 |
| 6 | 26,2 | 150 | 3,26 | 12,4 | 96,2 |
| 7 | 1108 | 650 | 133 | 12,0 | 95,1 |
| 8 | 500 | 410 | 30 | 5,0 | 85,7 |
| 9 | 1964 | 160 | 776,4 | 39,5 | 96,0 |

Fortsetzung der Tabelle

| Nr. der Beispiele | Produkt der Oxydation eines festen humifizierten fossilen Brennstoffs (POFHFB) |
|---|---|
| | Koeffizient der physiologischen Aktivität $(K_{phA})$ |
| 1 | 19 |
| 5 | 1,37 |
| 6 | 1,10 |
| 7 | 1,29 |
| 8 | 1,50 |
| 9 | 1,14 |

Die nachstehenden Beispiele erläutern die Verwendung des erfindungsgemäßen POFHFB.

Beispiel 10: Komplexbildende Fähigkeit

Beim gemeinsamen Titrieren des POFHFB (flüssig, hergestellt nach Beispiel 2) mit Metallkationen mit einem alkalischen Mittel verschiebt sich der pH-Wert bis 1,5.

Die verwendeten Metallionen ergeben nach ihrer komplexbildenden Fähigkeit in einem neutralen und einem schwachsaueren Medium folgende Reihe:

$$FE^{+3} > Al^{+3} > Cu^{+2} > Zn^{+2} > Co^{+2} > Ca^{+2}$$

Beispiel 11: Fermentative Aktivität

Gemäß Beispielen 1,3,4,6,7 hergestelltes POFHFB weist fermentative Aktivität auf. 20 ml einer 1,5%-igen Lösung des Produktes zersetzen 10 ml einer 4%-igen Wasserstoffperoxid-Lösung bei einer Temperatur von 20°C unter Ausscheidung von 18,2 ml Sauerstoff in 6 Minuten.

Beispiel 12:

Einfluß auf Atmung und oxydative Phosphorylierung von Mitochondrien.

Gemäß Beispiel 2 hergestelltes POFHFB beeinflußt die Atmungsintensität von Mitochondrien.

Der Zusatz von $2\bullet10^{-2}$% POFHFB zum Inkubationsmedium der Mitochondrien steigert deren Atmungsgeschwindigkeit von 10 auf 17,8 nM $O_2\bullet min^{-1}\bullet mg$ Protein$^{-1}$ und vergrößert auch den Phosphorylierungskoeffizienten von 1,7 auf 2,3.

Beispiel 13: Produktivität der Schweineaufzucht

Bei der Schweineaufzucht in größerem Maßstab fördert die Verabreichung von pulverförmigen und flüssigem POFHFB (gemäß Beispielen 1,3,4,5,6,7,8 und 9) in einer Dosis von 100-200 mg pro kg Lebendgewicht an Ferkel, die noch gesäugt werden, sowie an Absatzferkel ein intensives Wachstum der Schweine, einen verbesserten Gesamtzustand und eine erhöhte nichtspezifische Resistenz des Organismus. Die Produktivität steigt um 8 - 10%, die Futterkosten pro 100 kg Lebendgewichtzunahme sinken und die Rentabilität wird um 8,2 - 19,2% gesteigert.

Beispiel 14: Gesamtzustand von Jungvieh

Die Verwendung des pulverförmigem POFHFB (gemäß Beispielen 5, 8 und 9) bei der Fütterung von Ferkeln fördert die Steigerung des Wachstums und die Verbesserung des Gesamtzustands der Ferkel bei der Aufzucht um 8,0 - 8,6%. Dabei verringert sich die Anzahl von schwachen Ferkeln, die in ihrem Wachstum zurückbleiben, um 5,8 - 16,3%.

Beispiel 15: Wachstum von Rindern

Die Verabreichung von pulverförmigem POFHFB (gemäß Beispielen 5, 8 und 9) in einer Dosis von 50 mg/kg an Jungbullen ermöglicht eine Steigerung der tagesdurchschnittliche Zunahme um 18,0% und eine Senkung der Futterkosten um 15%. Bei den Tieren ist ein intensiverer Stoffwechsel zu beobachten. Der Eiweißgehalt des Fleisches nimmt um 7,8% zu, die Verwertung des Futterproteins für die Zunahme steigt um 3,8 - 4,0%. Bei der Aufzucht von zum Auffüllen des Milchkuhbestands bestimmten Färsen führt eine ständige Verabreichung von pulverförmigem POFHFB (gemäß Beispielen 5, 8 und 9) in einer Dosis von 100 mg/kg zu einer Steigerung der tagesdurchschnittlichen Zunahme um 7,2%.

Beispiel 16: Milchleistung

Die Verwendung von pulverförmigem POFHFB (gemäß Beispielen 5, 8 und 9) beim Füttern von Milchkühen in einer Dosis von 100 mg/kg ermöglicht eine Steigerung der Milchleistung innerhalb der Laktationszeit um 8%, der Produktion von Milchfett um 6,9%, des Anteils an Trockensubstanz und Eweiß in der Milch um 10,9 - 13,5%. Bei der Verwendung von POFHFB innerhalb der Laktationszeit wurden keine Erkrankungen der Tiere und keine Veränderung der Stoffwechselprozesse sowie der Milchqualität beobachtet.

Beispiel 17: Anwendung in der Geflügelzucht

Die Verabreichung von pulverförmigem POFHFB (gemäß Beispielen 5, 8 und 9)in einer Dosis von 0,25% der Futtermasse steigert die Ausbeute an Eimasse um 5,7 kg je 1000 Stück Eier und senkt den Futterverbrauch in der Produktion um 4,0%. Die Verabreichung des POFHFB in einer Dosis von 0,5%, bezogen auf die Futtermasse, erhöht das Lebendgewicht von Hühnern um 20%.

Beispiel 18: Anwendung in der Fischzucht

Die Verwendung von pulverförmigem POFHFB (gemäß Beispielen 5, 8 und 9) bei der Aufzucht von Jungkarpfen in einer Dosis von 5,0 mg/kg Futter ergibt eine Gewichtszunahme von 18% bei gleichzeitigem Anstieg der Überlebensrate um 60%.

Beispiel 19:

Ernteerträge landwirtschaftlicher Kulturen Die Verwendung von flüssigem POFHFB (gemäß Beispielen 1, 3, 4, 6 und 7) für Getreidekulturen beim Spritzen von Pflanzen im Mehrblattstadium erhöht den Ernteertrag von Sommergerste um 7%, von Winterweizen um 26,5% und von Hafer um 46%.

Beispiel 20: Zusammenwirken von POFHFB (gemäß Beispiel 5) mit Schwefelwasserstoff und $\alpha$-Methylindol

Durch POFHFB kann der Gehalt an ökologisch schädlichen Verbindungen im Boden, in Industrie- und Haushaltsabfällen herabgesetzt werden. Das Präparat bindet Schwefelwasserstoff irreversibel. Bei einem Verhältnis der Ge-wichtskonzentrationen von $H_2S$ zu POFHFB von 1:1 beseitigt POFHFB Schwefelwasserstoff vollständig aus einem wässrigen System. Das POFHFB absorbiert $\alpha$-Methylindol aus der nichtwässrigen Phase. 1 g POFHFB, hergestellt nach Beispiel 5, absorbiert 0,7 - 2,3 mg $\alpha$-Methylindol und n-Heptan.

Beispiel 21: Entwicklung von Infusorien des Typs Tetrahymena pyriformis

Ergebnisse eines Vergleichs des relativen biologischen Wertes eines Nitrohuminwuchsstoffes am Beispiel der Infusoria Tetrahymena pyriformis zeigen, daß POFHFB mit einer Konzentration von 0,1% (gemäß Beispielen 1, 3, 4, 6 und 7) im Vergleich zum Eiweißsubstrat (ganzes Hühnerei) vorteilhafter ist, da es die Menge der gezüchteten Infusorien um 7,8% vergrößert.

Industrielle Anwendbarkeit

Das erfindungsgemäße Oxydationsprodukt eines festen humifizierten fossilen Brennstoffs kann im Pflanzenanbau, in der Viehzucht und in der Fischzucht als Stoffwechselstimulator und als Wuchsstoff verwendet werden, der den Ernteertrag landwirtschaftlicher Kulturen, die Produktivität in der Viehzucht sowie die Wachstums- und Überlebensraten der gezüchteten Fische verbessert, desweiteren als Inaktivator von ökologisch schädlichen Verbindungen im Boden, in Industrie- und Haushaltsabfällen und in der Atmosphäre.

**Patentansprüche**

1. Verfahren zur Herstellung des Oxydationsprodukts eines festen humifizierten fossilen Brennstoffs das wasserlöslich und ethylalkoholunlöslich ist, ein Fragment einer oxydativ-hydrolytischen Zersetzung der Huminsäuren ist, ein Molekulargewicht von 150 -650 Dalton aufweist und folgende Eigenschaften aufweist:

    - Zusammensetzung der Elemente, %:
      C: 50±5, H: 5±2, N: 5±2, O: 40±5;
    - Absorptionsmaximum im UV-Spektrum (in $Na_2S$) bei einer Wellenlänge von 530 und 640 Nm;
    - maximale Absorptionsfrequenzen im IR-Spektrum (KBr): 3430, 3205, 1710, 1620, 1410, 1390, 1090, 1050, 780, 600 cm$^{-1}$
    - Gehalt an Carboxylgruppen 3,5 -4,5 mG-Val/g und an Hydroxylgruppen 4,0-5,0 mG-Val/g;
    - Temperatur bei Carbonisierungsbeginn: 195°C (bei Ermittlung im Thermographieverfahren in Stickstoff);
    - Aschegehalt: 1,5 - 3%,

    **dadurch gekennzeichnet, daß** der feste humifizierte fossile Brennstoff mit einer Feuchte von mindestens 10%, welcher Huminsäuren mit einem durchschnittlichen Molekulargewicht von 900 - 6000 Dalton enthält, bei einer Temperatur von 50 - 150°C mit einem Oxydationsmittel behandelt wird, das, bezogen auf Aktivsauerstoff, in einer Menge von 0,05-0,50 Gewichtsteile pro 1 Gewichtsteil der o.g. Huminsäuren eingesetzt wird, das erhaltene Reaktionsgemischs filtriert, die wässrige Lösung neutralisiert und das Oxidationsprodukt mit Ethylalkohol ausgefällt, getrocknet und zerkleinert wird.

2. Verfahren nach Anspruch 1, **dadurch gekennzeichnet, daß** der feste humifizierte fossile Brennstoff, Torf oder Braunkohle mit einem Huminsäurengehalt von mindestens 10 Gew.% ist.

3. Verfahren nach Anspruch 1 oder 2, **dadurch gekennzeichnet, daß** das Oxydationsmittel, aus der Gruppe: konzentrierte Salpetersäure, Stickstoffoxide, Ozon und Sauerstoff, ausgewählt ist.

4. Verfahren nach einem der Ansprüche 1-3, **dadurch gekennzeichnet, daß** das Oxydationsmittel, aus der Gruppe: wässrige Lösung der Salpetersäure, wässrige Lösung des Wasserstoffperoxids, ausgewählt wird und das in Form einer Suspension erhaltene genannte Reaktionsgemisch durch Trennung in feste und flüssige Phase in das Endprodukt umgewandelt wird, wobei die flüssige Phase mit einem alkalischen Mittel neutralisiert und bis zu einem Feststoffgehalt von 20 - 30 Gew.% in der Lösung konzentriert wird, wobei im Endprodukt 10 - 15 Gew.% der wasserlöslichen und alkoholunlöslichen Fraktion vorhanden sind, die mit Ethylalkohol ausgefällt wird.

5. Verfahren nach Anspruch 4, **dadurch gekennzeichnet, daß** die Behandlung mit dem genannten Oxydationsmittel in Gegenwart von 1 - 8 Gew.% einer wässrigen Elektrolytlösung durchgeführt wird.

## Claims

1. Process for the production of the oxidation product of a solid humified fossil fuel, which is soluble in water and insoluble in ethyl alcohol, is a fragment of an oxidative-hydrolytic decomposition of the humic acids, has a molecular weight of 150-650 Dalton and has the following properties:

   - composition of the elements, %:
     C: 50±5, H: 5±2, N: 5±2, O: 40±5;
   - absorption maximum in the uv spectrum (in $Na_2S$) at a wavelength of 530 and 640 Nm;
   - maximum absorption frequencies in the infrared spectrum (KBr): 3430, 3205, 1710, 1620, 1410, 1390, 1090, 1050, 780, 600 $cm^{-1}$
   - content of carboxyl groups 3.5-4.5 mG-Val/g and of hydroxyl groups 4.0-5.0 mG-Val/g;
   - temperature at the commencement of carbonisation: 195°C (on determination in nitrogen in the thermography process);
   - ash content: 1.5-3%,

   characterised in that the solid humified fossil fuel with a moisture content of at least 10% and containing humic acids with an average molecular weight of 900-6000 Dalton is treated at a temperature of 50-150°C with an oxidising agent, which is used in a quantity of 0.05-0.50 parts by weight to 1 part by weight of the above-mentioned humic acids, calculated on the basis of active oxygen, the reaction mixture obtained is filtered, the aqueous solution neutralised and the oxidation product precipitated with ethyl alcohol, dried and crushed.

2. Process according to Claim 1, characterised in that the solid humified fossil fuel is peat or lignite with a humic acid content of at least 10% by weight.

3. Process according to Claim 1 or 2, characterised in that the oxidising agent is selected from the group: concentrated nitric acid, nitrogen oxides, ozone and oxygen.

4. Process according to one of Claims 1-3, characterised in that the oxidising agent is selected from the group: aqueous solution of nitric acid, aqueous solution of hydrogen peroxide, and the said reaction mixture obtained in the form of a suspension is converted into the end product by separation into a solid and a liquid phase, whereby the liquid phase is neutralised with an alkaline agent and is concentrated to a solid content of 20-30% by weight in the solution, whereby 10-15% by weight of the fraction which is soluble in water and insoluble in alcohol and is precipitated with ethyl alcohol is present in the end product.

5. Process according to Claim 4, characterised in that the treatment is conducted with the said oxidising agent in the presence of 1-8% by weight of an aqueous electrolyte solution.

## Revendications

1. Procédé de préparation du produit d'oxydation d'un combustible fossile humidifié solide, qui est soluble dans l'eau et qui est insoluble dans l'alcool éthylique, qui est un fragment d'une décomposition hydrolytique oxydative d'acides huminiques, qui présente un poids moléculaire de 150 à 650 daltons et présente les propriétés suivantes :

   - Composition des éléments, %:
     C: 50±5, H: 5±2, N: 5±2, O: 40±5;
   - Absorption maximale dans le spectre UV (dans $Na_2S$) à une longueur d'onde de 530 et 640 NM;
   - Fréquences d'absorption maximales dans le spectre IR (KBr): 3430, 3205, 1710, 1620, 1410, 1390, 1090, 1050, 780, 600 $cm^{-1}$
   - Teneur en radicaux carboxyle 3,5-4,5 mG-Val/g et en radicaux hydroxyle 4,0-5,0 mG-Val/g;
   - Température de commencement de carbonisation: 195°C (par détermination selon le procédé thermographique dans l'azote);
   - Teneur en cendre: 1,5 - 3%,

caractérisé en ce que l'on traite le combustible fossile humidifié solide, d'une humidité d'au moins 10%, qui contient des acides huminiques d'un poids moléculaire moyen de 900 à 6000 daltons, à une température de 150 à 150°C, par un agent d'oxydation qui, par rapport à l'oxygène actif, s'utilise en une proportion de 0,05 à 0,50 partie en poids par partie en poids des acides huminiques susmentionnés, on filtre le mélange réactionnel obtenu, on neutralise la solution aqueuse et on précipite le produit de l'oxydation à l'aide d'alcool éthylique, on le sèche et on le broie.

2. Procédé suivant la revendication 1, caractérisé en ce que le combustible fossile humidifié solide est de la tourbe ou de la lignite, d'une teneur en acides huminiques d'au moins 10% en poids.

3. Procédé suivant la revendication 1 ou 2, caractérisé en ce que l'agent d'oxydation est choisi dans le groupe formé par l'acide nitrique concentré, des oxydes d'azote, l'ozone et l'oxygène.

4. Procédé suivant l'une quelconque des revendications 1 à 3, caractérisé en ce que l'on choisit l'agent d'oxydation dans le groupe formé par une solution aqueuse de l'acide nitrique, une solution aqueuse du peroxyde d'hydrogène et en ce que l'on convertit le mélange réactionnel précité, obtenu sous la forme d'une suspension, en le produit final par séparation en une phase solide et une phase liquide, où on neutralise la phase liquide avec un agent alcalin et on la concentre jusqu'à une teneur en solides de 20 à 30% dans la solution, où, dans le produit final, sont présents de 10 à 15% en poids de la fractions soluble dans l'eau et insoluble dans l'alcool, que l'on précipite à l'aide d'alcool éthylique.

5. Procédé suivant la revendication 4, caractérisé en ce que l'on entreprend le traitement par l'agent d'oxydation précité en présence de 1 à 8% en poids d'une solution aqueuse d'électrolyte.